(19) Europäisches Patentamt
European Patent Office
Office européen des brevets

(11) EP 1 043 066 A1

(12) DEMANDE DE BREVET EUROPEEN

(43) Date de publication:
**11.10.2000 Bulletin 2000/41**

(21) Numéro de dépôt: **99870067.8**

(22) Date de dépôt: **09.04.1999**

(51) Int Cl.[7]: **B01J 31/00**, B01J 31/12, C08G 63/82, C08G 65/10, C08G 65/26

(84) Etats contractants désignés:
**AT BE CH CY DE DK ES FI FR GB GR IE IT LI LU MC NL PT SE**
Etats d'extension désignés:
**AL LT LV MK RO SI**

(71) Demandeur: **Omnichem S.A.**
**1435 Mont-Saint-Guibert (BE)**

(72) Inventeurs:
- **Dubois, Philippe G.**
  **4260 Braives (BE)**
- **Martin, Eric Y.**
  **4101 Jemeppe-Sur-Meuse (BE)**
- **Jerome, Robert J.**
  **4845 Jalhay (BE)**

(74) Mandataire: **Van Malderen, Michel et al**
**Office van Malderen**
**Place Reine Fabiola 6/1**
**1083 Bruxelles (BE)**

(54) **Compositions catalytiques à base d'yttrium et des métaux des terres rares pour la polymérisation de composés hétérocycliques oxygénés**

(57) La présente invention se rapporte à une composition catalytique de type homogène ou hétérogène caractérisée en ce qu'elle est le produit résultant de la réaction d'une mole de composé métallique de formule $M[N(SiR_3)_2]_3$ ,dans laquelle R représente un radical alkyle, linéaire ou ramifié, substitué ou non, contenant de 1 à 10 atomes de carbone et M représente un métal, à l'état trivalent, choisi dans le groupe comprenant l'yttrium et les métaux des terres rares, avec p moles ($p \geq 3$) de composé organique à hydrogène labile.

EP 1 043 066 A1

## Description

### Objet de l'invention

La présente invention concerne des compositions catalytiques à base d'yttrium et des métaux des terres rares utilisables pour la polymérisation et la copolymérisation de composés hétérocycliques oxygénés, et en particulier de lactones, de lactides et d'oxiranes, les polymères tels qu'obtenus par ces procédés ainsi que l'utilisation de ces polymères.

### Arrière-plan technologique à la base de l'invention

La polymérisation par ouverture de cycle de monomères hétérocycliques oxygénés a suscité un intérêt remarquable au cours de ces 40 dernières années comme en témoignent les nombreux systèmes amorceurs décrits dans la littérature. Cependant, parmi ces systèmes, seul un nombre limité assure une polymérisation dite "vivante" c'est-à-dire exempte de réactions de terminaison et de transfert et permettant un contrôle parfait des paramètres moléculaires.

Les premiers travaux en polymérisation par ouverture de cycle des composés hétérocycliques oxygénés furent essentiellement consacrés à la polymérisation anionique telle qu'amorcée par des alcoolates alcalins. Si elle montre un caractère vivant en ce qui concerne l'oxirane, elle nécessite des conditions réactionnelles très sévères. De plus, le contrôle de la polymérisation n'est plus observé dans le cas des oxiranes substitués en raison de réactions de transfert. De la même façon, la polymérisation des lactones et des lactides s'accompagne de réactions secondaires de transestérification intra- et intermoléculaire entrant en compétition avec la croissance des chaînes polyesters.

### Etat de la technique

A partir des années 60, de nombreux composés organométalliques, tels que des alkylmétaux, des oxydes métalliques ou des alcoolates métalliques se sont révélés être des amorceurs très efficaces de la polymérisation des lactones et des lactides et ont entraîné un intérêt sans précédent pour la polymérisation par ouverture de cycle. Parmi les composés étudiés depuis lors, les alcoolates d'aluminium regroupant les $\mu$-oxo-alcoolates bimétalliques, les trialcoolates d'aluminium, les alcoolates d'alkylaluminium sont apparus comme les amorceurs les plus attractifs et les plus versatiles. Ces amorceurs assurent la polymérisation vivante, et donc parfaitement contrôlée, des lactones et des lactides par ouverture de leur cycle au niveau de la liaison acyle-oxygène selon un mécanisme dit de "coordination-insertion". En accord avec ce mécanisme, le document BE-1001149-A (BE-8900527) décrit la préparation d'alcoolates d'aluminium permettant la synthèse de polyesters aux extrémités de chaînes sélectivement fonctionnalisées. Les intérêts de tels polymères en ingénierie macromoléculaire ne sont plus à démontrer. Enfin, il est important de noter que les alcoolates d'aluminium précités ne polymérisent pas de manière contrôlée les oxiranes.

Les métalloporphyrines (aluminium, zinc,...) se sont aussi révélés des amorceurs très intéressants. De par l'encombrement des substituants porphyrines, ils permettent d'éviter les problèmes d'agrégation des espèces actives rencontrés, dans certains solvants, avec les alcoolates d'aluminium. De plus, ils assurent la polymérisation vivante des lactones, des lactides mais aussi des oxydes d'alkylène. Cependant, ils présentent des inconvénients majeurs. D'une part, la polymérisation est lente et fortement ralentie, comme dans le cas des alcoolates d'aluminium, par la présence d'alcool libre en excès par rapport au nombre de sites métalliques. D'autre part, les métalloporphyrines sont chers et impossible à séparer du polymère formé.

Les alcoolates d'aluminium fixés sur des particules de silice tels que décrits dans la demande de brevet FR-2691380-A1 (co)polymérisent de manière vivante les oxiranes, lactones et lactides et permettent une excellente fonctionnalisation des extrémités de chaîne des polymères formés. Ces catalyseurs constituent actuellement une alternative de premier choix à l'utilisation de ligands porphyrines même si la cinétique de polymérisation reste lente.

Le brevet US-5 028 667 est le premier exemple de l'utilisation de composés d'yttrium et de métaux des terres rares pour la polymérisation de lactones. Depuis lors, plusieurs amorceurs, basés sur ces métaux, ont été étudiés. Les amorceurs de type alcoolate tels que le triisoproxyde d'yttrium montrent une activité exceptionnelle, particulièrement en polymérisation des lactides. Les polymères synthétisés sont parfaitement définis tant au niveau des masses moléculaires, de la polydispersité que de l'identité des extrémités de chaînes, résultat d'une polymérisation vivante. Toutefois, le plus souvent, ces alcoolates d'yttrium ou de terres rares nécessitent de longues procédures de préparation et se présentent sous la forme d'agrégats. De plus, la polymérisation de l'oxyde d'éthylène requiert des conditions de réaction sévères (Polymérisation en masse (en l'absence de solvant), T>70 °C) et des temps de polymérisation très longs (supérieurs à 40h).

## Buts de l'invention

La présente invention a pour objet des compositions catalytiques à base d'yttrium et des métaux des terres rares remédiant aux inconvénients précités, assurant la polymérisation et la copolymérisation par ouverture de cycle contrôlées de composés hétérocycliques oxygénés, comportant un ou plusieurs hétéroatomes, et en particulier de lactones, de lactides et d'oxiranes.

## Description de l'invention

Les compositions catalytiques de la présente invention permettent d'éviter les problèmes liés à l'agrégation des espèces actives qui limite le nombre de sites d'amorçage de la réaction de polymérisation et peut modifier l'environnement chimique des sites restants. De plus, ces compositions permettent d'associer à la fois l'utilisation de très faibles concentrations en métal, une grande activité et un excellent contrôle des masses moléculaires ainsi que de la distribution des masses moléculaires des polymères synthétisés.

Les systèmes catalytiques proposés par la présente invention assurent la fonctionnalisation parfaitement sélective et aisée de chacune des extrémités de chaîne. L'intérêt d'un tel avantage est bien connu, que ce soit la synthèse de macromonomères, de polymères multifonctionnels ou de copolymères séquencés. Les chaînes polymères ainsi obtenues sont porteuses soit d'une fonction non hydroxyle à une extrémité et d'une fonction hydroxyle à l'autre, soit d'une fonction non hydroxyle en chacune de leurs extrémités, soit d'une fonction hydroxyle en chacune de leurs extrémités. Dans ce dernier cas, les chaînes peuvent être linéaires, avec ou non une fonction réactive au sein de la macromolécule, ou bien elles peuvent être à trois branches ou plus.

L'activité des systèmes de la présente invention est largement supérieure à celles observées avec des systèmes similaires décrits antérieurement, particulièrement lorsque l'yttrium, le néodyme et le samarium sont utilisés comme métal.

Les compositions catalytiques mises au point peuvent être de type homogène ou hétérogène selon qu'elles comprennent ou non un support minéral.

Les systèmes catalytiques homogènes de l'invention sont très faciles et très rapides à préparer dans la mesure où les espèces actives sont directement générées "in situ" dans le milieu réactionnel juste avant le processus de polymérisation.

Les catalyseurs hétérogènes de l'invention comprennent un support minéral parfaitement inerte et stable dans les conditions de polymérisation. Ces systèmes dits supportés permettent l'obtention de polymères et de copolymères directement exempts de toute trace de résidus catalytiques. Les systèmes catalytiques hétérogènes de l'invention présentent l'avantage de pouvoir être recyclés. Ainsi, après polymérisation et récupération des chaînes polymères formées par un moyen approprié, tel que par exemple l'intervention de solvants protiques, ils peuvent être directement réutilisés pour une nouvelle polymérisation du même monomère ou d'un autre monomère polymérisable. Les compositions catalytiques supportées de la présente invention sont particulièrement efficaces pour la polymérisation par ouverture de cycle des oxiranes puisque dans ce cas, ils permettent l'utilisation de conditions de réaction relativement douces et montrent des activités jamais atteintes en polymérisation de type coordinative de ces monomères.

Les compositions catalytiques de type homogène et hétérogène (supporté) sont décrites séparément ci-après.

D'une manière générale, suivant l'invention, les compositions catalytiques de type homogène mises au point reposent sur l'utilisation des composés suivants :

a) un composé métallique choisi dans le groupe formé par les triamidures métalliques de la formule $M[N(SiR_3)_2]_3$ dans laquelle R représente un radical alkyle, linéaire ou ramifié, substitué ou non, contenant de 1 à 10 atomes de carbone et M représente un métal, à l'état trivalent, choisi dans le groupe comprenant l'yttrium et les métaux des terres rares,

b) au moins un composé organique à hydrogène labile de la formule $H\text{-}Y\text{-}R'(Z)_n\text{-}X_m$ dans laquelle :

- lorsque n=m=0, R' représente un radical organique, totalement hydrocarboné, ayant de 1 à 100 atomes de carbone et le plus souvent de 1 à 50 atomes de carbone, choisi parmi le groupe formé par un radical alkyle, saturé ou insaturé, linéaire ou ramifié, un radical aryle, un radical alkaryle et un radical aralkyle,
- lorsque m=0 et 1≤n≤10, R' représente un radical organique partiellement hydrocarboné, comportant au moins un groupe fonctionnel bivalent Z,
- lorsque n=0 et 1≤m≤3, R' représente un radical organique, totalement ou partiellement hydrocarboné, comportant au moins un groupe fonctionnel monovalent non protique ou protique X,
- lorsque 1≤m+n≤13, R' représente un radical organique partiellement hydrocarboné, comportant au moins un

groupe fonctionnel monovalent non protique ou protique X et au moins un groupe fonctionnel bivalent Z

et choisi de préférence dans le groupe formé par les alcools (-Y-=-O-), les acides carboxyliques (-Y-=-COO-) et les thiols (-Y-=-S-).

Plus précisément, les compositions catalytiques de type homogène selon l'invention sont formées par le mélange de produits résultant de la réaction de p moles de composé organique à hydrogène labile de structure $H\text{-}Y\text{-}R'(Z)_n\text{-}X_m$ avec une mole de composé métallique $M[N(SiR_3)_2]_3$ (équation 1) avec $p \geq 3$ :

***Equation 1***

$$M[N(SiR_3)_2]_3 + p\ H\text{-}Y\text{-}R'(Z)_n\text{-}X_m \rightarrow M\text{-}[\text{-}Y\text{-}R'(Z)_n\text{-}X_m]_3$$

$$+\ 3\ HN(SiR_3)_2 + (p\text{-}3)\ H\text{-}Y\text{-}R'(Z)_n\text{-}X_m$$

La réaction entre le composé métallique et le composé organique à hydrogène labile peut s'effectuer en l'absence ou en présence de solvant. Le solvant utilisé peut être n'importe quel solvant non protique anhydre connu du composé métallique. Le plus souvent, le solvant est un solvant hydrocarboné choisi dans le groupe formé par le toluène, les xylènes, le benzène et le tétrahydrofuranne. Ce solvant peut être introduit indépendamment et/ou par l'intermédiaire soit d'une solution du composé métallique, soit d'une solution du composé organique à hydrogène labile ou encore soit à la fois des deux types de solution précités. Dans ce dernier cas, les solvants utilisés pour chacune des deux solutions peuvent être identiques ou différents, de préférence miscibles.

Suivant l'invention, la réaction (équation 1) est menée à une température dépendante de la structure du composé organique à hydrogène labile et comprise le plus souvent entre environ 0 °C et la température d'ébullition du solvant non protique anhydre utilisé. D'une manière préférentielle, la température de la réaction varie d'environ 20 °C à environ 80 °C. La durée de la réaction peut varier de préférence entre environ 5 minutes (min) et plusieurs heures (h) .

Le composé métallique utilisé est choisi dans le groupe formé par les triamidures de la formule $M[N(SiR_3)_2]_3$ dans laquelle R représente un radical alkyle, linéaire ou ramifié, substitué ou non, contenant de 1 à 10 atomes de carbone et M représente un métal, à l'état trivalent, choisi dans le groupe comprenant l'yttrium et les métaux des terres rares. Les métaux des terres rares sont formés par les éléments métalliques de numéro atomique compris entre 57 et 71 et appelés le lanthane, le cérium, le praséodyme, le néodyme, le prométhium, le samarium, l'europium, le gadolinium, le terbium, le dysprosium, le holmium, l'erbium, le thulium, l'ytterbium et le lutétium. Les métaux préférés pour la présente invention sont l'yttrium, le lanthane, le néodyme, la samarium et l'ytterbium.

Suivant une forme de réalisation particulièrement avantageuse de l'invention, M représente l'yttrium et R un radical méthyle.

Le composé organique à hydrogène labile employé appartient aux composés de la formule $H\text{-}Y\text{-}R'(Z)_n\text{-}X_m$ dans laquelle, lorsque n=m=0, R' représente un radical organique, totalement hydrocarboné, ayant de 1 à 100 atomes de carbone et le plus souvent de 1 à 50 atomes de carbone, choisi parmi le groupe formé par un radical alkyle, saturé ou insaturé, linéaire ou ramifié, un radical aryle, un radical alkaryle et un radical aralkyle, lorsque m=0 et $1 \leq n \leq 10$, R' représente un radical organique partiellement hydrocarboné, comportant au moins un groupe fonctionnel bivalent Z, lorsque n=0 et $1 \leq m \leq 3$, R' représente un radical organique, totalement ou partiellement hydrocarboné, comportant au moins un groupe fonctionnel monovalent non protique ou protique X, lorsque $1 \leq m+n \leq 13$, R' représente un radical organique partiellement hydrocarboné, comportant au moins un groupe fonctionnel bivalent Z et au moins un groupe fonctionnel monovalent non protique ou protique X et est choisi de préférence dans le groupe formé par les alcools (-Y-=-O-), les acides carboxyliques (-Y-=-COO-) et les thiols (-Y-=-S-). Plus préférentiellement, le composé organique à hydrogène labile est choisi dans le groupe formé par les alcools de la formule $H\text{-}O\text{-}R'(Z)_n\text{-}x_m$ et les acides carboxyliques de la formule $H\text{-}OOC\text{-}R'(Z)_n\text{-}X_m$. Comme on vient de le mentionner, le radical R' est soit porteur de groupements fonctionnels bivalents inclus dans sa chaîne (m=0 et $1 \leq n \leq 10$), tels qu'une amine secondaire ou tertiaire (-Z-=-NH-, -NR- avec R = alkyle ou aryle), un ester (-Z-=-COO-), un thioester (-Z-=-COS-), un éther (-Z-=-O-), un thioéther (-Z-=-S-), une fonction silylée ($\text{-}Z\text{-=-}SiR_2\text{-}$ avec R = alkyle ou aryle), soit porteur de groupements fonctionnels monovalents (n=0 et $1 \leq m \leq 3$) comme des groupes non protiques, tels que un halogène (X=Br, Cl, I), une amine tertiaire ($X=NR_2$ avec R = alkyle ou aryle), une fonction nitrile (x=C≡N), une fonction silylée ($X=SiR_3$ avec R = alkyle, aryle ou alcoxy), une insaturation de type allylique ($X=\text{-}CH=CH_2$), (méth)acrylique ($X=\text{-}OOC\text{-}CR=CH_2$ avec R = H, alkyle ou aryle), styrénique ($X=\text{-}C_6H_5\text{-}CH=CH_2$), un éther (X=OR avec R = alkyle ou aryle) et avantageusement un acétal

(X= 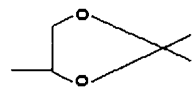 )

précurseur d'un diol (X=di-OH), un imide et avantageusement un phtalimide

(X= 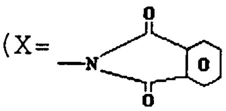 )

précurseur d'une amine primaire ($X=NH_2$), ou des groupes protiques, tels qu'un alcool (X=OH), une amine primaire ou secondaire ($X=NH_2$, NRH avec R = alkyle ou aryle), un thiol (X=SH), ou porteur à la fois des deux types de groupements fonctionnels précédemment décrits ($1 \leq m+n \leq 13$).

Avantageusement, lorsque m et n sont différents de 0, R' comporte de 1 à 20 atomes de carbone. Les compositions catalytiques homogènes selon l'invention peuvent également être formées par les produits obtenus par un procédé comprenant après la réaction entre le composé métallique et le composé à hydrogène labile (équation 1), une étape au cours de laquelle on élimine le composé de formule $HN(SiR_3)_2$ formé.

Suivant l'invention, les compositions catalytiques homogènes peuvent être les produits résultant du procédé comprenant après la réaction entre le composé métallique et le composé à hydrogène labile (équation 1), une étape au cours de laquelle on ajoute une base de Lewis telle qu'une amine tertiaire, dont la quantité est calculée par rapport à la quantité de métal utilisée.

Suivant l'invention, les compositions catalytiques de type homogène peuvent encore être préparées par un procédé alternatif consistant à ajouter à une composition catalytique homogène préalablement formée par réaction d'un composé à hydrogène labile sur un composé métallique (équation 1), un composé à hydrogène labile de formule $H-Y^1-R'^1'(Z^1)_n-X^1_m$, différent du composé à hydrogène labile précité et avec $Y^1$, $R'^1$, $Z^1$, $X^1$ définis de la même manière que Y, R, Z, X respectivement. Ledit ajout est effectué dans des conditions de remplacement des groupes $-Y-R'(Z)_n-X_m$ liés au métal M par des groupes $-Y^1- R^1'(Z^1)_n-X^1_m$. L'équilibre de formation peut être déplacé par exemple par distillation de l'azéotrope $H-Y-R'(Z)_n-X_m$/toluène.

Suivant l'invention, les systèmes catalytiques de type hétérogène (ou supporté) sont préparés par un procédé comprenant les étapes suivantes :

a) on forme une solution, dans un solvant non protique anhydre, polaire ou non polaire, d'un composé métallique de la formule $M[N(SiR_3)_2]_3$ dans laquelle R représente un radical alkyle, linéaire ou ramifié, substitué ou non, contenant de 1 à 10 atomes de carbone et M représente un métal, à l'état trivalent, choisi dans le groupe comprenant l'yttrium et les métaux des terres rares,

b) on additionne, à la solution formée à l'étape a), au moins un composé organique à hydrogène labile ou une solution, dans un liquide inerte anhydre, d'au moins un composé organique à hydrogène labile de la formule $H-Y-R'(Z)_n-X_m$ dans laquelle :

- lorsque n=m=0, R' représente un radical organique, totalement hydrocarboné, ayant de 1 à 100 atomes de carbone et le plus souvent de 1 à 50 atomes de carbone, choisi parmi le groupe formé par un radical alkyle, saturé ou insaturé, linéaire ou ramifié, un radical aryle, un radical alkaryle et un radical aralkyle,
- lorsque m=0 et $1 \leq n \leq 10$, R' représente un radical organique partiellement hydrocarboné, comportant au moins un groupe fonctionnel bivalent Z,
- lorsque n=0 et $1 \leq m \leq 3$, R' représente un radical organique, totalement ou partiellement hydrocarboné, comportant au moins un groupe fonctionnel monovalent non protique ou protique X,
- lorsque $1 \leq m+n \leq 13$, R' représente un radical organique partiellement hydrocarboné, comportant au moins un groupe fonctionnel monovalent non protique ou protique X et au moins un groupe fonctionnel bivalent Z

et choisi de préférence dans le groupe formé par les alcools (-Y-=-O-), les acides carboxyliques (-Y-=-COO-) et les thiols (-Y-=-S-), ladite addition étant réalisée dans des conditions d'échange des groupements $-Y-R'(Z)_n-X_m$ dudit composé organique à hydrogène labile avec une partie des groupes $-N(SiR_3)_2$ du composé métallique $M[N(SiR_3)_2]_3$ et de formation d'un composé de structure $HN(SiR_3)_2$ et telles que le rapport molaire q entre ledit composé organique à hydrogène mobile et le composé métallique soit égal à un nombre non nul positif strictement inférieur à 3, de préférence égal à 1 ou 2, de manière à obtenir une solution comprenant les produits de la réaction suivante (équation 2) avec

0<q<3 :

***Equation 2***

$$q\ H\text{-}Y\text{-}R'(Z)_n\text{-}X_m + M[N(SiR_3)_2]_3 \rightarrow [X_m\text{-}(Z)_nR'\text{-}Y\text{-}]_q\text{-}M\text{-}[N(SiR_3)_2]_{3\text{-}q} + q\ HN(SiR_3)_2$$

c) on ajoute la solution formée à l'étape b) à un support minéral déshydraté ou à une suspension de support minéral déshydraté dans un solvant non protique anhydre, polaire ou non polaire, identique ou non au solvant utilisé à l'étape a) de préférence miscible à ce dernier, ledit support minéral étant un support minéral poreux ou non poreux possédant des groupes hydroxyles métalliques, de préférence des groupes Si-OH, dispersés sur sa surface, ledit ajout étant effectué dans des conditions telles qu'au moins une partie des groupes hydroxyles métalliques de la surface du support minéral réagissent avec les ligands du type $-N(SiR_3)_2$ du composé métallique intermédiaire $[X_m\text{-}(Z)_nR'\text{-}Y\text{-}]_q\text{-}M\text{-}[\text{-}N(SiR_3)_2]_{3\text{-}q}$ formé à l'étape b) (équation 2) de manière à former des liaisons support-O-M du type Si-O-M et à libérer des molécules d'amide de formule $HN(SiR_3)_2$,

d) on élimine l'excès éventuel de composé métallique intermédiaire et le composé $HN(SiR_3)_2$ formé à l'étape c) par au moins un lavage au moyen d'un solvant anhydre non protique inerte,

e) on additionne, éventuellement, à la suspension obtenue après l'étape d) un composé organique à hydrogène labile ou une solution, dans un liquide inerte anhydre, d'un composé organique à hydrogène labile de la formule $H\text{-}Y\text{-}R'(Z)_n\text{-}X_m$ identique celui utilisé à l'étape b), ledit composé organique à hydrogène labile est utilisé en excès par rapport au nombre de liaisons du type Si-O-M formées à l'étape c), ladite addition étant effectuée dans des conditions de réaction et d'échange des groupes $-Y\text{-}R'(Z)_n\text{-}X_m$ dudit composé organique à hydrogène labile avec des éventuels groupes $-N(SiR_3)_2$ et de formation de $HN(SiR_3)_2$ et ce afin de s'assurer qu'aucun des atomes de métal M fixés au support minéral, par au moins une liaison du type Si-O-M, ne soit porteur d'un groupement $-N(SiR_3)_2$,

f) on sépare, si nécessaire, la phase liquide obtenue à la fin de l'étape e) et

g) on récupère le matériau solide formé à l'étape e) ou dans le cas où l'étape f) n'a pas été effectuée, un mélange de produits comprenant le matériau solide formé à l'étape e), l'excès de composé à hydrogène labile et le solvant non protique anhydre, polaire ou non polaire utilisés à l'étape e) et le composé $HN(SiR_3)_2$ éventuellement formé à l'étape e).

Des réactions équivalentes peuvent être envisagées pour le cas d'autres supports comportant des groupes hydroxyles métalliques du type Al-OH, Zn-OH, etc.

Le composé métallique utilisé est choisi dans le groupe formé par les triamidures de la formule $M[N(SiR_3)_2]_3$ dans laquelle R représente un radical alkyle, linéaire ou ramifié, substitué ou non, contenant de 1 à 10 atomes de carbone et M représente un métal, à l'état trivalent, choisi dans le groupe comprenant l'yttrium et les métaux des terres rares. Les métaux des terres rares sont formés par les éléments métalliques de numéro atomique compris entre 57 et 71 et appelés le lanthane, le cérium, le praséodyme, le néodyme, le prométhium, le samarium, l'europium, le gadolinium, le terbium, le dysprosium, le holmium, l'erbium, le thulium, l'ytterbium et le lutétium. Les métaux préférés pour la présente invention sont l'yttrium, le lanthane, le néodyme, la samarium et l'ytterbium.

Contrairement aux trialoolates métalliques, les triamidures de la formule $M[N(SiR_3)_2]_3$ ne s'agrègent pas dans les conditions réactionnelles utilisées, assurant une fonction accrue des espèces actives sur le support.

Suivant une forme de réalisation particulièrement avantageuse de l'invention, M représente l'yttrium et R un radical méthyle.

Le composé organique à hydrogène labile employé appartient aux composés de la formule $H\text{-}Y\text{-}R'(Z)_n\text{-}X_m$ dans laquelle, lorsque n=m=0, R' représente un radical organique, totalement hydrocarboné, ayant de 1 à 100 atomes de carbone et le plus souvent de 1 à 50 atomes de carbone, choisi parmi le groupe formé par un radical alkyle, saturé ou insaturé, linéaire ou ramifié, un radical aryle, un radical alkaryle et un radical aralkyle, lorsque m=0 et $1 \leq M \leq 10$, R' représente un radical organique partiellement hydrocarboné, comportant au moins un groupe fonctionnel bivalent Z, lorsque n=0 et $1 \leq m \leq 3$, R' représente un radical organique, totalement ou partiellement hydrocarboné, comportant au moins un groupe fonctionnel monovalent non protique ou protique X, lorsque $1 \leq m+n \leq 13$, R' représente un radical organique partiellement hydrocarboné, comportant au moins un groupe fonctionnel monovalent non protique ou protique X et au moins un groupe fonctionnel bivalent Z et est choisi de préférence dans le groupe formé par les alcools (-Y-=-O-), les acides carboxyliques (-Y-=-COO-) et les thiols (-Y-=-S-). Plus préférentiellement, le composé organique à hydrogène labile est choisi dans le groupe formé par les alcools de la formule $H\text{-}O\text{-}R'(Z)_n\text{-}X_m$ et les acides carboxyliques de la formule $H\text{-}OOC\text{-}R'(Z)_n\text{-}X_m$. Comme on vient de le mentionner, le radical R' est soit porteur de groupements fonctionnels bivalents inclus dans sa chaîne (m=0 et $1 \leq n \leq 10$), tels qu'une amine secondaire ou tertiaire (-Z-=-NH-, -NR- avec R = alkyle ou aryle, un ester (-Z-=-COO-), un thioester (-Z-=-COS-), un éther (-Z-=-O-), un thioéther (-Z-=-S-), une fonction silylée (-Z-=-$SiR_2$- avec R = alkyle ou aryle), soit porteur de groupements fonctionnels monovalents (n=0 et 1≤m≤3) comme des groupes non protiques, tels que un halogène (X=Br, Cl, I), une amine tertiaire (X=$NR_2$ avec R = alkyle ou aryle), une fonction nitrile (X=C=N), une fonction silylée (X=$SiR_3$ avec R = alkyle, aryle ou alcoxy), une insaturation de type allylique (X=-CH=$CH_2$), (méth)acrylique (X=-OOC-CR=$CH_2$ avec R = H, alkyle ou aryle), styrénique (X=-$C_6H_5$-CH=$CH_2$), un éther (X=OR avec R = alkyle ou aryle) et avantageusement un acétal

(X= 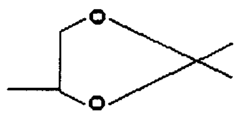 )

précurseur d'un diol (X=di-OH), un imide et avantageusement un phtalimide

(X= 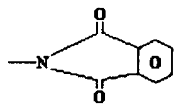 )

précurseur d'une amine primaire ou des groupes protiques, tels qu'un alcool (X=OH), une amine primaire ou secondaire (X=$NH_2$, NRH avec R = alkyle ou aryle), un thiol (X=SH), ou porteur à la fois des deux types de groupements fonctionnels décrits précédemment (1≤m+n≤13).

D'une manière avantageuse, lorsque m et n sont différents de 0, R' comporte de 1 à 20 atomes de carbone.

Le support minéral utilisé pour la fixation des espèces actives est un support minéral poreux ou non poreux de particules de forme quelconque préalablement déshydraté, dans la mesure où les molécules d'eau libre et physiquement adsorbée, ainsi qu'une partie de l'eau combinée dans les groupements hydroxyles métalliques ont été éliminées par traitement thermique. Cette opération de chauffage du support minéral est effectuée à des températures dépendantes de la nature de ce support, le plus souvent comprises entre environ 130 °C et environ 900 °C, sous courant gazeux de préférence inerte ou sous vide, selon un profil de température-temps approprié. Cette déshydratation permet de contrôler la nature et la densité des groupes hydroxyles métalliques présents à la surface du support minéral.

Suivant une réalisation avantageuse de l'invention, le support minéral est une silice poreuse dont l'essentiel du volume poreux est constitué de pores d'un diamètre supérieur à 5 nanomètres (nm) et possédant une surface spécifique comprise entre environ 100 et environ 750 mètres carrés par gramme ($m^2/g$), de préférence comprise entre 200 et 500 $m^2/g$.

Le solvant non protique anhydre, polaire ou non polaire employé est un solvant hydrocarboné, de préférence choisi dans le groupe formé par le toluène, les xylènes, le benzène et le tétrahydrofuranne mais peut aussi être choisi parmi les alcanes liquides dans les conditions normales de température et de pression (par exemple l'heptane).

Le liquide inerte anhydre utilisé pour former la solution du composé organique à hydrogène labile employée à l'étape b) peut être n'importe quel solvant de ce type de composé, de préférence miscible en toute proportion au solvant non protique anhydre, polaire ou non polaire précité. Ce liquide inerte anhydre est de préférence choisi dans le groupe formé par le toluène, les xylènes, le benzène et le tétrahydrofuranne.

La réaction du composé organique à hydrogène labile avec les groupements -$N(SiR_3)_2$ du composé métallique telle que décrite à l'étape b), ou avec les éventuels groupements -$N(SiR_3)_2$ toujours liés à des atomes de métal M, après la formation de liaisons du type Si-O-M décrite à l'étape c) et l'élimination de l'étape d), telle que décrite à l'étape e), est menée à une température variable, dépendante de la structure du composé organique à hydrogène labile et comprise le plus souvent entre environ 0°C et la température d'ébullition du solvant non protique anhydre, polaire ou non polaire, utilisé. D'une manière préférentielle, la température de la réaction s'échelonne entre environ 20 °C et 80 °C. La durée de cette réaction peut varier de préférence entre environ 5 minutes (min) et plusieurs heures (h) .

La formation de liaisons du type Si-O-M décrite à l'étape c) par réaction du composé métallique intermédiaire $[X_m\text{-}(Z)_nR'\text{-}Y\text{-}]_q\text{-}M\text{-}[\text{-}N(SiR_3)_2]_{3-q}$ formé à l'étape b) (équation 2) avec les groupes silanols dispersés à la surface du support minéral s'effectue de préférence entre environ 0 °C et la température d'ébullition du solvant non protique anhydre, polaire ou non polaire, utilisé. Plus préférentiellement, cette température est comprise entre environ 20 °C et environ 110 °C. La formation de liaisons du type Si-O-M requiert un temps de réaction d'au moins 10 minutes (min) et pouvant atteindre plusieurs heures (h).

L'élimination de l'excès éventuel de composé métallique intermédiaire effectuée à l'étape d) est généralement réalisée par lavage au moyen du solvant non protique anhydre utilisé à l'étape a) bien qu'un autre solvant non protique anhydre, polaire ou non polaire puisse être utilisé.

Suivant l'invention, les compositions catalytiques de type hétérogène peuvent aussi être formées par les produits obtenus par un procédé comprenant après les étapes f) et g), une étape h) au cours de laquelle on met sous vide le solide obtenu à l'étape g).

Suivant l'invention, les compositions catalytiques supportées peuvent être préparées par un procédé dans lequel l'étape f) est absente et contenant après l'étape g), une étape h) au cours de laquelle on élimine soit l'excès de composé à hydrogène labile récupéré de l'étape e), soit le composé $HN(SiR_3)_2$ éventuellement formé à l'étape e), soit le solvant non protique anhydre employé à l'étape e), ou encore soit une combinaison quelconque de ces trois produits.

Les compositions catalytiques hétérogènes selon l'invention peuvent être les produits résultant du procédé comprenant après l'étape g), une étape h) dans laquelle on additionne une base de Lewis telle qu'une amine tertiaire, en quantité calculée par rapport à la quantité de métal présente dans le solide formé à l'étape e).

Suivant l'invention, les compositions catalytiques de type hétérogène peuvent également être formées par un procédé comportant une étape a') identique à l'étape a), une étape b') dans laquelle on ajoute la solution formée à l'étape a') au support minéral déshydraté ou à une suspension du support minéral déshydraté dans un solvant non protique anhydre dans des conditions de formation de liaisons du type Si-O-M par réaction des groupes $-N(SiR_3)_2$ du composé métallique avec les groupes silanols de la surface du support, ledit composé métallique étant employé en excès par rapport au nombre de groupes silanols du support, une étape c') d'élimination de l'excès de composé métallique utilisé au cours de l'étape b'), une étape d') au cours de laquelle on additionne, à la suspension obtenue à l'étape c'), au moins un composé organique à hydrogène labile ou une solution d'au moins un composé organique à hydrogène labile de formule $H-Y-R'(Z)_n-X_m$ dans des conditions assurant l'échange de la totalité des groupements $-N(SiR_3)_2$ liés aux atomes de métal M fixés au support minéral par des groupements $-Y-R'(Z)_n-X_m$ et la libération de molécules de $HN(SiR_3)_2$. Il est important de signaler que ce procédé de préparation des compositions catalytiques hétérogènes ne permet pas un contrôle parfait de la manière dont le métal est fixé au support minéral et donc de la structure des espèces actives.

Les catalyseurs de type hétérogènes peuvent encore être obtenus par un procédé alternatif consistant à ajouter à une composition catalytique hétérogène préalablement formée, un composé à hydrogène labile de formule $H-Y^1-R'^1(Z^1)_n-X^1_m$, différent du composé à hydrogène labile utilisé pour la formation de ladite composition catalytique hétérogène et avec $Y^1$, $R'^1$, $Z^1$, $X^1$ définis de la même manière que Y, R, Z, X respectivement. Ledit ajout est effectué dans des conditions de remplacement des groupements $-Y-R'(Z)_n-X_m$ du métal M par des groupements $-Y^1-R^1{}'(Z^1)_n-X^1_m$. L'équilibre de formation peut être déplacé par exemple par distillation de l'azéotrope $H-Y-R'(Z)_n-X_m$/toluène.

Suivant l'invention, l'ensemble des opérations conduisant à la formation des compositions catalytiques homogènes et hétérogènes ainsi que toute utilisation de ces compositions sont de préférence réalisées sous atmosphère inerte, par exemple sous azote ou sous argon. La présence de toute trace d'humidité est en effet néfaste à la stabilité des espèces catalytiques. La présente invention porte également sur l'utilisation des compositions catalytiques homogènes et hétérogènes décrites ci-avant pour réaliser la polymérisation ou la copolymérisation par ouverture de cycle de composés oxygénés hétérocycliques, comportant un ou plusieurs hétéroatomes. Parmi ces composés, les lactones, les lactides, les anhydrides cycliques, les carbonates cycliques et les oxiranes constituent les familles de monomère préférées. A titre d'exemples non limitatifs, les monomères envisageables sont la δ-valérolactone, la β-propiolactone, l'ε-caprolactone, le dioxanne-1,4 one-2, les lactides (isomères d,l; d,d ou l,l), le glycolide, l'oxyde d'éthylène, l'oxyde de propylène et l'oxyde de butylène.

La polymérisation peut être activée soit par l'excès de composé à hydrogène labile utilisé, soit par le composé $HN(SiR_3)_2$ présent dans la composition catalytique, soit par l'amine tertiaire ajoutée après la formation de la composition catalytique, soit par une combinaison des trois composés précédemment cités. Une telle activation est particulièrement intéressante pour les compositions catalytiques de type hétérogène. Selon l'invention, le composé à hydrogène labile est également un agent de transfert efficace de sorte que la polymérisation se déroule selon un mécanisme de compétition entre la réaction de propagation du monomère et une réaction d'échange entre les chaînes polymères en croissance liées aux atomes de métal et les chaînes polymères libres terminées par un hydrogène labile (équation 3 : schématisée dans le cas particulier où M=Y, Y=O, R=Me, Monomère=ε-caprolactone) :

Equation 3

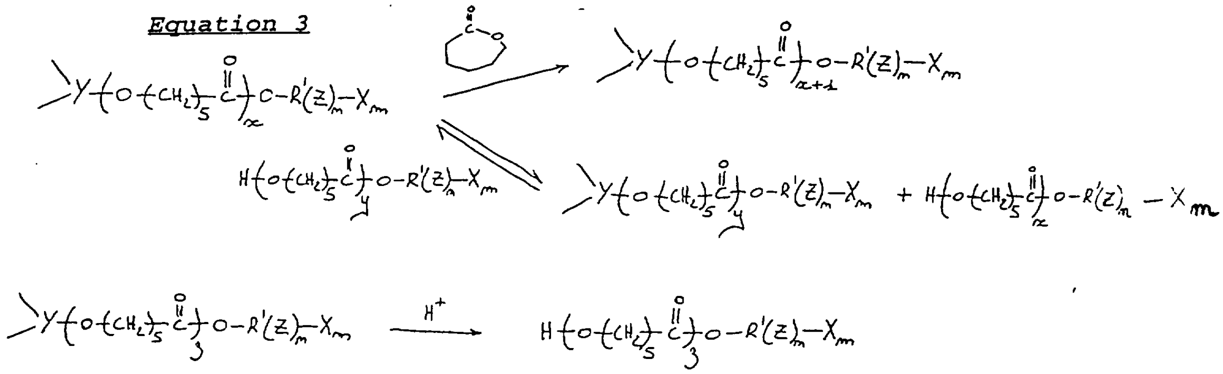


Une fois le ou les monomère(s) complètement consommé(s), l'hydrolyse acide des sites actifs entraîne que toutes les chaînes polymères formées possèdent une fonction hydroxyle à une extrémité de chaîne et une fonction $-Y-R'(Z)_n-X_m$ à l'autre extrémité. Selon la structure du composé à hydrogène labile utilisé, des polymères de différents types et de différentes architectures peuvent être synthétisés. A titre d'exemples non limitatifs, on peut citer des polymères téléchéliques ($\alpha,\omega$-difonctionnels) symétriques ou asymétriques, des macromomères utilisables pour la mise au point de copolymères greffés, des polymères peigne mais aussi des copolymères séquencés ou statistiques.

Dans le cas des compositions catalytiques de type hétérogène, l'ensemble des chaînes polymères obtenues après polymérisation peuvent également être récupérées par solvolyse de la liaison M-O ou de la liaison M-S, formée en cours de polymérisation par insertion du ou des monomère(s), que l'on polymérise, sur la liaison M-Y. Le plus souvent, cette solvolyse est réalisée au moyen d'un solvant protique, tel qu'un alcool. Elle permet d'assurer le recyclage des espèces actives dans la mesure où les espèces fixées à la surface du support après solvolyse sont directement utilisables pour une nouvelle polymérisation.

La polymérisation peut s'effectuer en l'absence ou en présence de solvant. Dans le dernier cas, le solvant généralement utilisé peut être par exemple, hydrocarboné, tel que le toluène, les xylènes, le tétrahydrofuranne, halogéné, tel que le chlorure de méthylène.

La polymérisation selon l'invention est le plus souvent menée à des températures s'échelonnant d'environ -60 °C à environ 150 °C. Plus préférentiellement, la température de polymérisation est comprise entre environ 0 °C et la température d'ébullition du solvant. Le temps de polymérisation peut varier dans des limites relativement étendues allant de quelques secondes à plusieurs heures.

Pour la mise en oeuvre de la réaction de polymérisation, différents types de réacteurs peuvent être utilisés tels que par exemple, un réacteur à cuve ou tubulaire, à lit agité, fixe ou fluidisé et fonctionnant selon un procédé discontinu, semi-continu ou continu. D'une manière avantageuse, dans le cas des compositions catalytiques de type hétérogène, un procédé continu sera préféré.

Les polymères obtenus suivant les procédés de la présente invention peuvent être utilisés dans des domaines d'application très variés. Ainsi, par exemple, les polymères $\alpha,\omega$-difonctionnels peuvent être avantageusement engagés dans la formation de copolymères multiséquencés ou de réseaux tridimensionnels qui peuvent constituer de nouveaux matériaux utilisables dans le domaine biomédical ou dans le domaine des polyuréthanes. Les copolymères séquencés ou statistiques sont utilisables comme agents de surface. En particulier, les copolymères amphiphiles peuvent assurer la stabilisation d'émulsions ou de dispersions. Divers copolyesters sont également à la base des systèmes à libération contrôlée permettant de réguler la vitesse de libération de molécules biologiquement actives. D'autres domaines d'applications sont les films et les fibres polymères (emballage,...), les cosmétiques (crèmes, lotions,...), les électrolytes polymères, les adhésifs, l'industrie pétrolière,...

Les exemples suivants permettent d'illustrer la présente invention sans en limiter la portée.

## Exemples

### *Exemple 1 :*

1.a. Préparation du système catalytique homogène

Sous atmosphère inerte d'azote ($N_2$), on introduit dans un ballon préalablement séché, xg (x/570,06 mol) de tris(N,N-hexaméthyldisilylamide) d'yttrium $Y[N(SiMe_3)_2]_3$. Cette quantité est solubilisée dans un volume v de toluène anhydre (préalablement séché par reflux sur un mélange Na-benzophénone et fraîchement distillé) et l'ensemble est amené à la température T. A cette température, la solution formée est additionnée, sous azote, d'un volume y (ml) de

2-propanol (préalablement séché sur $CaH_2$ et distillé) en solution dans le toluène anhydre (0,5 mol/l). Ce volume est calculé sur base de la quantité d'yttrium utilisée et du rapport initial $[ROH]_0/[Y]_0$ désiré. L'ensemble est laissé à réagir sous agitation pendant un temps t.

1.b. Polymérisation de l'ε-caprolactone (ε-CL)

On amène la composition catalytique homogène à la température $T_p$. On y ajoute, sous azote, un volume V d'ε-CL (préalablement séchée sur $CaH_2$ et distillée) et on laisse réagir sous agitation vigoureuse. Lorsque le temps $t_p$ est écoulé, la polymérisation est stoppée par ajout au milieu réactionnel de quelques gouttes d'une solution d'acide chlorhydrique 1mol/l. La solution obtenue est ensuite additionnée lentement à une quantité 10 fois supérieure d'heptane et est refroidie à -20 °C pendant une nuit. Le polymère, précipité, est isolé par filtration.

1.c. Purification et caractérisation du polymère

Le polymère est solubilisé dans du chloroforme (solution à 10% en poids) et sous agitation, mise en présence d'un volume identique d'une solution aqueuse de l'acide éthylène diamine tétraacétique tamponnée à pH=4,8. Après 12h d'agitation, la phase organique est décantée et lavée jusqu'au retour à la neutralité du pH. Le polymère est alors précipité dans l'heptane. Après 5h à -20 °C, on récupère le polymère par filtration et on le sèche sous vide ($10^{-2}$mmHg) pendant 12 h. On récupère quantitativement le polymère (PCL).

La masse moléculaire et la polydispersité sont mesurées par chromatographie sur gel perméable (GPC). L'analyse par résonance magnétique nucléaire du proton RMN-$^1$H renseigne à la fois sur la masse moléculaire et la nature des bouts de chaînes.

La masse moléculaire théorique des chaînes polymères est calculée sur la base du rapport molaire initial monomère sur alcool, de la conversion et dans l'hypothèse où toutes les molécules d'alcool introduites ont amorcées la polymérisation.

Le tableau 1 présente les homopolymères de poly(ε-caprolactone) réalisés selon le mode opératoire décrit ci-dessus. Les résultats de chromatographie sur gel perméable et de résonance magnétique nucléaire du proton montrent le caractère parfaitement contrôlé de la polymérisation même lorsqu'une partie des molécules d'alcool initialement introduites n'amorcent pas la polymérisation. Dans chaque cas, les chaînes polymères sont sélectivement et quantitativement fonctionnalisées par une fonction hydroxyle en une extrémité de chaîne et par un groupe ester isopropylique à l'autre extrémité.

***Exemple 2 :***

Suivant le mode opératoire décrit dans l'Exemple 1, on prépare une composition catalytique de type homogène par addition à 0,12g (2,1.10$^{-4}$mol) de $Y[N(SiMe_3)_2]_3$, préalablement dissout dans 86ml de toluène anhydre, de 12,6ml d'une solution de 2-propanol (préalablement séché sur $CaH_2$ et distillé) dans le toluène anhydre (0,5 mol/l) et réaction à 40 °C. Le rapport initial $[ROH]_0/[Y]_0$ est donc égal à 30.

Après 20 min, la composition catalytique homogène formée est amenée à la température ambiante (Tp=20°C) et on y ajoute 12ml d'ε-caprolactone anhydre. On laisse l'ensemble sous agitation pendant 3min. On prélève alors, sous azote, 54ml de solution réactionnelle que l'on hydrolyse par ajout de quelques gouttes d'une solution d'acide chlorhydrique 1 mol/l.

Au restant de la solution réactionnelle, on additionne 10ml d'ε-caprolactone anhydre et on laisse réagir pendant 2min. Après ce délai, la solution obtenue est additionnée à son tour de quelques gouttes de solution d'acide chlorhydrique 1 mol/1.

Dans le cas du prélèvement, on récupère 6,2g de poly(ε-caprolactone) sélectivement et quantitativement fonctionnalisée par une fonction hydroxyle en une extrémité de chaîne et par un groupe ester isopropylique à l'autre extrémité. La masse moléculaire mesurée par GPC ($M_n$=2150) est en accord avec la masse moléculaire théorique déterminée à partir du rapport monomère sur alcool pour une conversion totale en monomère ($M_{n,théorique}$=2000). La polydispersité de la poly(ε-caprolactone) est de 1,25. Dans le cas de la solution finale, on isole aussi une poly(ε-caprolactone) (16,8g) possédant un groupe ester isopropylique et un groupe -OH comme bouts de chaîne. Sa masse moléculaire estimée par GPC vaut 4900, valeur en bon accord avec la masse moléculaire théorique de 5200 calculée à conversion totale du second aliquot d's-caprolactone. La polydispersité est égale à 1,25.

Cet exemple démontre que dans le cas des compositions catalytiques homogènes, tout ajout de monomère frais à un système complètement polymérisé conduit à une reprise quantitative de la polymérisation avec une évolution de la masse moléculaire proportionnelle à la quantité de monomère ajoutée et une conservation de la faible polydispersité. Cette reprise est donc parfaitement contrôlée.

***Exemple 3 :***

Sous azote, on additionne à 0,15g (2,6.$10^{-4}$mol) de tris(N,N-hexaméthyldisilylamide) d'yttrium $Y[N(SiMe_3)_2]_3$, préalablement placé dans un ballon à deux tubulures sec, 50ml de toluène anhydre. A 40°C, on ajoute, à la solution formée, 3,9ml d'une solution de 2-propanol 0,2mol/l dans la toluène anhydre (soit 3 équivalents/équivalent d'Y) et on laisse réagir pendant 20min.

On distille sous vide ($10^{-2}$mmHg) l'azéotrope $HN(SiMe_3)_2$/toluène à 40°C jusqu'à l'obtention d'un produit solide parfaitement sec. On élimine ainsi toute trace de $HN(SiMe_3)_2$. Après retour à la température ambiante (Tp=20°C), ce produit solide est ensuite additionné consécutivement de 9,2ml de solution de 2-propanol dans le toluène sec (0,2mol/l) (soit 7 équivalents/équivalent d'Y) et de 200ml de toluène anhydre.

A l'ensemble, 26ml d'ε-caprolactone sont ajoutés sous agitation. Après réaction pendant 100 sec, quelques gouttes d'une solution d'acide chlorhydrique 1 mol/l sont introduites dans le milieu réactionnel et le polymère formé est récupéré comme décrit à l'Exemple 1.

Le polymère isolé (26,1g, soit une conversion de 97% en ε-caprolactone) est une poly(ε-caprolactone) de masse moléculaire mesurée par GPC égale à 10000. Cette valeur est en très bon accord avec la valeur théorique ($M_{n,théorique}$=9700) calculée, pour une conversion de 97%, à partir du rapport ε-caprolactone sur 2-propanol.

***Exemple 4 :***

4.a. Préparation de la composition catalytique hétérogène

On introduit, dans un four tubulaire, 2,05g de silice Grace (Grade M432; diamètre des particules : 63 à 200.$10^{-6}$m; surface spécifique : 320$m^2$/g; volume poreux : 1,05ml/g). Après un dégazage sous vide, la silice est chauffée sous vide selon le programme de température suivant. On chauffe jusqu'à 100°C avec une vitesse de montée en température de 10°C par minute (°C/min), puis de 100°C à 130°C avec une vitesse de 1°C/min, puis on effectue un palier à 130°C pendant 1h à la fin duquel on chauffe de 130°C à 800°C avec une vitesse de 10°C/min et on termine par un palier de 2h à 800°C. La silice ainsi déshydratée est transférée sous azote dans un ballon à deux tubulures pour y être conservée.

Sous atmosphère inerte de $N_2$, on place dans un ballon préalablement séché, 0,58g (1,02.$10^{-3}$mol) de tris (N,N-hexaméthyldisilylamide) d'yttrium $Y[N(SiMe_3)_2]_3$. Cette quantité est solubilisée dans 30ml de toluène anhydre (préalablement séché par reflux sur un mélange Na-benzophénone puis sur polystyryllithium et fraîchement distillé) et l'ensemble est amené à la température de 50°C. A cette température, la solution formée est additionnée, sous azote, de 4,1ml de 2-propanol (préalablement séché sur $CaH_2$ et distillé) en solution dans le toluène anhydre (0,5 mol/l). On laisse réagir pendant 20min.

La solution alors obtenue est ajoutée, sous azote, aux 2,05g de silice déshydratée, préalablement mis en suspension dans 10ml de toluène sec. Après 30min de réaction à 50°C, on élimine la phase liquide et on lave la silice deux fois avec 25ml de toluène sec.

A 50°C toujours, la silice obtenue est remise en suspension dans 35ml de toluène sec et puis additionnée de 5ml de solution de 2-propanol dans le toluène sec (0,5mol/l). L'ensemble est laissé à réagir pendant 30min à la suite desquelles la phase liquide est séparée. Les particules de silice ainsi traitées sont alors mises sous vide pendant une nuit à température ambiante et conservées sous azote.

4.b. Polymérisation de l'ε-CL

On transfère, sous azote, 0,16g de la silice traitée dans un ballon préalablement séché et on additionne successivement 28ml de toluène sec (séché par reflux sur un mélange Na-benzophénone et fraîchement distillé) et 2,7ml de solution 0,5mol/l de 2-propanol dans le toluène sec. La suspension ainsi formée est chauffée à 40°C, température choisie pour la polymérisation.

A 40°C, on ajoute à la suspension 2,8ml d'ε-CL anhydre, sous azote et on laisse réagir l'ensemble sous agitation vigoureuse. Après 1h30min de réaction, on prélève 10ml de la suspension réactionnelle que l'on hydrolyse par ajout de quelques gouttes d'une solution d'acide chlorhydrique 1 mol/l. L'analyse RMN-$^1$H montre l'absence de monomère (ε-CL) dans le milieu réactionnel.

Au restant de la suspension, on additionne 1,5ml d'ε-caprolactone anhydre et on laisse réagir, à la température de 40°C, pendant 2h. Après ce délai, quelques gouttes de solution d'acide chlorhydrique 1 mol/l sont ajoutées. L'analyse RMN-$^1$H de la suspension obtenue révèle l'absence d'ε-CL.

4.c. Récupération et caractérisation du polymère

Après hydrolyse, la phase liquide est séparée de la silice par filtration et est additionnée à une quantité dix fois supérieure d'heptane. L'ensemble est gardé à -20°C pendant au moins 5h avant de récupérer les chaînes polymères précipitées par filtration.

Dans le cas du prélèvement intermédiaire, on récupère une poly(ε-caprolactone) sélectivement et quantitativement fonctionnalisée par une fonction hydroxyle en une extrémité de chaîne et par un groupe ester isopropylique à l'autre extrémité dont la masse moléculaire mesurée par RMN-$^1$H ($M_n$=1800 ± 10%) est en parfait accord avec la masse moléculaire théorique déterminée pour une conversion totale en monomère ($M_{n,théorique}$=1800). Cette valeur théorique est calculée en considérant que l'ensemble des fonctions alcoolates fixés sur les particules de silice et des molécules d'alcool libres initialement présentes dans le milieu réactionnel amorcent la réaction de polymérisation. La distribution des masses moléculaires de la poly(ε-caprolactone) est contrôlée par GPC. La polydispersité est de 1,15.

Dans le cas du polymère final isolé, on obtient une poly(ε-caprolactone) de formule $(CH_3)_2CHO-(-C(O)-(CH_2)_5-O-)_n-H$. Sa masse moléculaire estimée par RMN-$^1$H vaut 3200 ± 10%, valeur en très bon accord avec la masse moléculaire théorique de 3300 calculée à conversion totale du second aliquot d's-caprolactone. La polydispersité est ici égale à 1,15.

Cet exemple démontre que dans le cas des compositions catalytiques supportées, tout ajout de monomère frais à un système complètement polymérisé conduit à une reprise quantitative de la polymérisation avec une évolution de la masse moléculaire proportionnelle à la quantité de monomère ajoutée et une conservation de la faible polydispersité. Cette reprise est donc parfaitement contrôlée à l'image de la polymérisation initiale.

***Exemple 5 :***

5.a. Préparation de la composition catalytique hétérogène

On introduit, dans un ballon à deux tubulures, 3,99g de silice Grace décrite à l'exemple 4. Après un dégazage sous vide, on chauffe la silice jusqu'à 130°C avec une vitesse de montée en température de 10°C par minute (°C/min), puis on réalise un palier à cette température pendant 15h. La silice ainsi déshydratée est conservée sous azote.

Sous atmosphère inerte de $N_2$, on place dans un ballon préalablement séché, 2,31g (4,05.10$^{-3}$mol) de $Y[N(SiMe_3)_2]_3$. On solubilise cette quantité dans 50ml de toluène anhydre (préalablement séché par reflux sur un mélange Na-benzophénone puis sur polystyryllithium et fraîchement distillé) et l'ensemble est amené à la température de 50°C. A cette température, on additionne, sous azote, 7,8ml de 2-propanol en solution dans le toluène anhydre (0,52 mol/l) et on laisse réagir pendant 20min.

La solution alors obtenue est ajoutée, sous azote, aux 3,99g de silice déshydratée. La suspension ainsi formée est encore additionnée de 32ml de toluène sec et après 30min de réaction à 50°C, l'ensemble de la phase liquide est éliminée. On lave alors la silice une fois avec du toluène sec. Le solide résultant est alors mis sous vide pendant une nuit à température ambiante et gardé sous azote.

5.b. Polymérisation de l'oxyde d'éthylène (OE)

On transfère, sous azote, 1,85g de la silice traitée dans un ballon préalablement séché et on y additionne successivement 160ml de toluène sec (séché par reflux sur un mélange Na-benzophénone et fraîchement distillé) et 8ml de solution 0,52mol/l de 2-propanol dans le toluène sec. La suspension ainsi formée est injectée, sous azote, dans un réacteur en acier inoxydable, préalablement conditionné par un chauffage sous vide à 110°C pendant 2h et maintenu à 60°C, température choisie pour la polymérisation.

Après élimination de l'azote par une mise sous vide très brève, 40g (0,908mol) d'oxyde d'éthylène sont introduits dans le réacteur. La polymérisation est menée sous agitation vigoureuse. Après 2h de réaction, la température est portée à 80°C et poursuivie pendant 2h supplémentaires. La réaction est arrêtée par ajout de quelques ml d'une solution d'acide chlorhydrique 0,1 mol/l.

5.c. Récupération et caractérisation du polymère

Les chaînes polymères formées sont récupérées de la manière décrite à l'exemple 4. On obtient 13,2g de polymère de formule $(CH_3)_2CHO-(-CH_2-CH_2-O-)_n-H$ (Conversion en OE=32,5%). Les masses moléculaires moyennes mesurées par GPC ($M_n$=1100) et par Maldi-Tof ($M_n$=1200) sont très proches de la masse moléculaire théorique calculée pour une telle conversion ($M_{n,théorique}$=1300). La distribution des masses moléculaires est faible (polydispersité=1,1).

***Exemple 6 :***

On introduit, dans un ballon à deux tubulures préalablement séché, 1,94g de silice que l'on déshydrate comme décrit à l'exemple 5.

Dans un autre ballon, on place, sous atmosphère inerte de $N_2$, 0,82g (1,44.10$^{-3}$mol) de $Y[N(SiMe_3)_2]_3$. Cette quantité est ensuite dissoute dans 40ml de toluène anhydre (préalablement séché par reflux sur un mélange Na-benzophénone puis sur polystyryllithium et fraîchement distillé) et la solution résultante est ajoutée, sous azote, aux particules de silice déshydratées. La réaction est menée sous agitation à 100°C pendant 50min à la suite desquelles l'excès de complexe d'yttrium est éliminé par deux lavages consécutifs de la silice avec 30 ml de toluène sec.

Après retour à 50°C, la silice traitée est remise en suspension dans 20ml de toluène sec et est additionnée de llml de 2-propanol (préalablement séché sur $CaH_2$ et distillé) en solution dans le toluène anhydre (0,5 mol/l). On laisse réagir pendant 1h.

Ce délai écoulé, la phase liquide est séparée et la silice est à nouveau lavée avec 20ml de toluène sec.

La silice ainsi traitée est amenée à 40°C et est successivement additionnée, sous $N_2$, de 54ml de toluène sec (séché par reflux sur un mélange Na-benzophénone et fraîchement distillé) et de 5,1ml de solution de 2-propanol dans le toluène sec (0,5mol/l). 7,4ml d'ε-caprolactone sont alors ajoutés à la suspension formée et on laisse réagir l'ensemble.

Après 2h30min, l'analyse RMN-$^1$H du milieu réactionnel montre que l'ε-CL a été complètement convertie. On hydrolyse alors les espèces actives par ajout de quelques ml d'une solution d'acide chlorhydrique 0,1 mol/l.

Les chaînes polymères sont récupérées comme décrit à l'exemple 4. L'analyse par résonance magnétique nucléaire RMN-$^1$H de ce polymère montre qu'il consiste en des chaînes de poly(ε-caprolactone) sélectivement et quantitativement terminées par une fonction hydroxyle en une extrémité de chaîne et par un groupe ester isopropylique à l'autre extrémité de chaîne. L'analyse RMN-$^1$H donne également une masse moléculaire $M_n$ de 1900 ± 10% qui est sensiblement égale à la masse moléculaire théorique ($M_{n,théorique}$=2200). La polydispersité est contrôlée par GPC et vaut 1,1.

Tableau 1 – Homopolymérisation de l'ε-CL amorcée par le système homogène $Y[N(SiMe_3)_2]_3$/2-propanol dans le toluène à la température Tp

| x (g) | y (ml) | v (ml) | $\frac{[^iPrOH]_0}{[Y]_0}$ | T (°C) | t (min) | V (ml) | $[\varepsilon\text{-CL}]_0$ (mol/l) | Tp (°C) | tp (min) | $\overline{M}_{n,theor}$ | Conversion (%)[a] | $\overline{M}_{n,RMN}$ | $\overline{M}_{n,GPC}$ | $\overline{M}w/\overline{M}n$ | α (%)[b] |
|---|---|---|---|---|---|---|---|---|---|---|---|---|---|---|---|
| 0,20 | 7 | 47,5 | 10 | 50 | 30 | 6,8 | 1 | 20 | 1 | 2000 | 98,5 | 2300 | 2400 | 1,2 | 0 |
| 0,20 | 7 | 129,5 | 10 | 50 | 30 | 17 | 1 | 20 | 1 | 5000 | 100 | 4500 | 5000 | 1,2 | 0 |
| 0,12 | 4,2 | 156,5 | 10 | 50 | 30 | 20 | 1 | 20 | 1,6 | 10000 | 100 | - | 11000 | 1,15 | 0 |
| 0,20 | 3,5 | 269,5 | 10 | 50 | 60 | 34 | 1 | 40 | 3 | 20000 | 100 | - | 22000 | 1,10 | 0 |
| | | | 50 | 50 | 30 | | 0,75 | 20 | 3 | 2000 | 99 | 2300 | 2100 | 1,25 | 0 |
| 0,07 | 1[c] | 200 | 100 | 40 | 20 | 25 | 1 | 0 | 13 | 2000 | 100 | 2400 | 1800 | 1,3 | 18 |
| 0,06 | 1,2[c] | 240 | 150 | 40 | 20 | 30 | 1 | 20 | 10 | 1500 | 75 | 2300 | 1600 | 1,3 | 25 |

[a]Valeur calculée par gravimétrie

[b]Pourcentage de 2-propanol libre présent dans le milieu réactionnel après arrêt de la réaction. Valeur déterminée par RMN

[c]Ajout de 2-propanol pur (préalablement séché sur $CaH_2$ et fraîchement distillé)

## Revendications

1. Composition catalytique de type homogène ou hétérogène caractérisée en ce qu'elle est le produit résultant de la réaction d'une mole de composé métallique de formule $M[N(SiR_3)_2]_3$ ,dans laquelle R représente un radical alkyle, linéaire ou ramifié, substitué ou non, contenant de 1 à 10 atomes de carbone et M représente un métal, à l'état trivalent, choisi dans le groupe comprenant l'yttrium et les métaux des terres rares, avec p moles ($p \geq 3$) de composé organique à hydrogène labile de structure $H\text{-}Y\text{-}R'(Z)_n\text{-}X_m$ dans laquelle :

   - lorsque n=m=0, R' représente un radical organique, totalement hydrocarboné, ayant de 1 à 100 atomes de carbone et le plus souvent de 1 à 50 atomes de carbone, choisi parmi le groupe formé par un radical alkyle, saturé ou insaturé, linéaire ou ramifié, un radical aryle, un radical alkaryle et un radical aralkyle,
   - lorsque m=0 et $1 \leq n \leq 10$, R' représente un radical organique partiellement hydrocarboné, comportant au moins un groupe fonctionnel bivalent Z,
   - lorsque n=0 et $1 \leq m \leq 3$, R' représente un radical organique, totalement ou partiellement hydrocarboné, comportant au moins un groupe fonctionnel monovalent non protique ou protique X,
   - lorsque $1 \leq m+n \leq 13$, R' représente un radical organique partiellement hydrocarboné, comportant au moins un groupe fonctionnel monovalent non protique ou protique X et au moins un groupe fonctionnel bivalent Z,

   et choisi de préférence dans le groupe formé par les alcools (-Y-=-O-), les acides carboxyliques (-Y-=-COO-) et les thiols (-Y-=-S-), ladite réaction étant effectuée en l'absence de solvant ou en présence d'un solvant non protique anhydre.

2. Composition catalytique de type homogène selon la revendication 1, caractérisée en ce que l'on utilise comme métal M du composé métallique, l'yttrium et les métaux des terres rares formés par les éléments métalliques de numéro atomique compris entre 57 et 71 et appelés le lanthane, le cérium, le praséodyme, le néodyme, le prométhium, le samarium, l'europium, le gadolinium, le terbium, le dysprosium, le holmium, l'erbium, le thulium, l'ytterbium et le lutétium.

3. Composition catalytique de type homogène selon l'une ou l'autre des revendications 1 et 2, caractérisée en ce que le composé à hydrogène labile est choisi dans le groupe formé par les alcools de la formule $H\text{-}O\text{-}R'(Z)_n\text{-}X_m$ et les acides carboxyliques de la formule $H\text{-}OOC\text{-}R'(Z)_n\text{-}X_m$, R', Z et X répondant aux définitions précitées.

4. Composition catalytique de type homogène selon l'une quelconque des revendications 1 à 3, caractérisée en ce que l'on utilise comme groupements fonctionnels bivalents Z des amines secondaires ou tertiaires, un ester (-COO-), un thioester (-COS-), un éther (-O-), un thioéther (-S-), des fonctions silylées, comme groupements fonctionnels monovalents non protiques X des halogènes tels que Br, Cl, I, des amines tertiaires, une fonction nitrile, des fonctions silylées, des insaturations de type allylique, (méth)acrylique, styrénique, des fonctions éthers, des imides, et comme groupements fonctionnels monovalents protiques X des alcools, des amines primaires ou secondaires, un thiol.

5. Composition catalytique de type homogène selon l'une quelconque des revendications 1 à 4, caractérisée en ce que lorsque m et n sont différents de 0, le radical R' comporte de 1 à 20 atomes de carbone.

6. Composition catalytique de type homogène selon l'une quelconque des revendications 1 à 5, caractérisée en ce que R représente un radical méthyle.

7. Composition catalytique de type homogène selon l'une quelconque des revendications 1 à 6, caractérisée en ce que M représente l'yttrium, le lanthane, le néodyme, la samarium et l'ytterbium.

8. Composition catalytique de type homogène selon la revendication 7, caractérisée en ce que M représente l'yttrium.

9. Composition catalytique de type homogène selon l'une quelconque des revendications 1 à 8, caractérisée en ce que le solvant non protique anhydre éventuellement utilisé est un solvant du composé métallique choisi dans le groupe comprenant le toluène, les xylènes, le benzène et le tétrahydrofuranne.

10. Composition catalytique selon l'une quelconque des revendications 1 à 9, caractérisée en ce que les espèces actives sont fixées sur un support minéral poreux ou non poreux de particules de forme quelconque préalablement déshydraté, dans la mesure où les molécules d'eau libre et physiquement adsorbée, ainsi qu'une partie de l'eau

combinée dans les groupements hydroxyles métalliques ont été éliminées par traitement thermique.

**11.** Composition selon la revendication 10, caractérisée en ce que le support minéral est une silice poreuse dont l'essentiel du volume poreux est constitué de pores d'un diamètre supérieur à 5 nanomètres (nm) et possédant une surface spécifique comprise entre environ 100 et environ 750 mètres carrés par gramme ($m^2/g$), de préférence comprise entre 200 et 500 $m^2/g$.

**12.** Procédé de préparation des compositions selon l'une quelconque des revendications 1 à 11, caractérisé en ce qu'il comprend les étapes suivantes :

a) on forme une solution, dans un solvant non protique anhydre, polaire ou non polaire, d'un composé métallique de la formule $M[N(SiR_3)_2]_3$ dans laquelle R représente un radical alkyle, linéaire ou ramifié, substitué ou non, contenant de 1 à 10 atomes de carbone et M représente un métal, à l'état trivalent, choisi dans le groupe comprenant l'yttrium et les métaux des terres rares,
b) on additionne, à la solution formée à l'étape a), au moins un composé organique à hydrogène labile ou une solution, dans un liquide inerte anhydre, d'au moins un composé organique à hydrogène labile de la formule $H\text{-}Y\text{-}R'(Z)_n\text{-}X_m$ dans laquelle :

- lorsque n=m=0, R' représente un radical organique, totalement hydrocarboné, ayant de 1 à 100 atomes de carbone et le plus souvent de 1 à 50 atomes de carbone, choisi parmi le groupe formé par un radical alkyle, saturé ou insaturé, linéaire ou ramifié, un radical aryle, un radical alkaryle et un radical aralkyle,
- lorsque m=0 et $1 \leq n \leq 10$, R' représente un radical organique partiellement hydrocarboné, comportant au moins un groupe fonctionnel bivalent Z,
- lorsque n=0 et $1 \leq m \leq 3$, R' représente un radical organique, totalement ou partiellement hydrocarboné, comportant au moins un groupe fonctionnel monovalent non protique ou protique X,
- lorsque $1 \leq m+n \leq 13$, R' représente un radical organique partiellement hydrocarboné, comportant au moins un groupe fonctionnel monovalent non protique ou protique X et au moins un groupe fonctionnel bivalent Z

et choisi de préférence dans le groupe formé par les alcools (-Y-=-O-), les acides carboxyliques (-Y-=-COO-) et les thiols (-Y-=-S-), ladite addition étant réalisée dans des conditions d'échange des groupements $\text{-}Y\text{-}R'(Z)_n\text{-}X_m$ dudit composé organique à hydrogène labile avec une partie des groupes $\text{-}N(SiR_3)_2$ du composé métallique $M[N(SiR_3)_2]_3$ et de formation d'un composé de structure $HN(SiR_3)_2$ et telles que le rapport molaire q entre ledit composé organique à hydrogène mobile et le composé métallique soit égal à un nombre non nul positif strictement inférieur à 3, de préférence égal à 1 ou 2, de manière à obtenir une solution comprenant les produits de la réaction suivante avec $0<q<3$ :

$$q\ H\text{-}Y\text{-}R'(Z)_n\text{-}X_m + M[N(SiR_3)_2]_3 \rightarrow [X_m\text{-}(Z)_nR'\text{-}Y\text{-}]_q\text{-}M\text{-}[N(SiR_3)_2]_{3\text{-}q} + q\ HN(SiR_3)_2$$

c) on ajoute la solution formée à l'étape b) à un support minéral déshydraté ou à une suspension de support minéral déshydraté dans un solvant non protique anhydre, polaire ou non polaire, identique ou non au solvant utilisé à l'étape a) mais miscible en toute proportion à ce dernier, ledit support minéral étant un support minéral poreux ou non poreux possédant des groupes hydroxyles métalliques, de préférence Si-OH, dispersés sur sa surface, ledit ajout étant effectué dans des conditions telles qu'au moins une partie des groupes hydroxyles métalliques de la surface du support minéral réagissent avec les ligands $\text{-}N(SiR_3)_2$ du composé métallique intermédiaire $[X_m\text{-}(Z)_nR'\text{-}Y\text{-}]_q\text{-}M\text{-}[\text{-}N(SiR_3)_2]_{3\text{-}q}$ formé à l'étape b) (équation 2) de manière à former des liaisons du type Si-O-M et à libérer des molécules d'amide de formule $HN(SiR_3)_2$,
d) on élimine l'excès éventuel de composé métallique intermédiaire et le composé $HN(SiR_3)_2$ formé à l'étape c) par au moins un lavage au moyen d'un solvant anhydre non protique inerte,
e) on additionne, éventuellement, à la suspension obtenue après l'étape d) un composé organique à hydrogène labile ou une solution, dans un liquide inerte anhydre, d'un composé organique à hydrogène labile de la formule $H\text{-}Y\text{-}R'(Z)_n\text{-}X_m$ identique celui utilisé à l'étape b), ledit composé organique à hydrogène labile est utilisé en excès par rapport au nombre de liaisons du type Si-O-M formées à l'étape c), ladite addition étant effectuée dans des conditions de réaction et d'échange des groupes $\text{-}Y\text{-}R'(Z)_n\text{-}X_m$ dudit composé organique à hydrogène labile avec des éventuels groupes $\text{-}N(SiR_3)_2$ et de formation de $HN(SiR_3)_2$ et ce afin de s'assurer qu'aucun des atomes de métal M fixés au support minéral, par au moins une liaison du type Si-O-M, ne soit porteur d'un groupement $\text{-}N(SiR_3)_2$,
f) on sépare, si nécessaire, la phase liquide obtenue à la fin de l'étape e) et

g) on récupère le matériau solide formé à l'étape e) ou dans le cas où l'étape f) n'a pas été effectuée, un mélange de produits comprenant le matériau solide formé à l'étape e), l'excès de composé à hydrogène labile et le solvant non protique anhydre, polaire ou non polaire utilisés à l'étape e) et le composé $HN(SiR_3)_2$ éventuellement formé à l'étape e).

**13.** Utilisation des compositions catalytiques homogènes et hétérogènes selon l'une quelconque des revendications 1 à 11 pour réaliser la polymérisation ou la copolymérisation par ouverture de cycles de composés oxygénés hétérocycliques, comportant un ou plusieurs hétéroatomes, de préférence les lactones, les lactides et les oxiranes.

Office européen des brevets

# RAPPORT DE RECHERCHE EUROPEENNE

Numéro de la demande
EP 99 87 0067

## DOCUMENTS CONSIDERES COMME PERTINENTS

| Catégorie | Citation du document avec indication, en cas de besoin, des parties pertinentes | Revendication concernée | CLASSEMENT DE LA DEMANDE |
|---|---|---|---|
| X | STEVELS W M ET AL: "KINETICS AND MECHANISM OF L-LACTIDE POLYMERIZATION USING TWO DIFFERENT YTTRIUM ALKOXIDES AS INITIATORS"<br>MACROMOLECULES,<br>vol. 29, no. 19,<br>1 septembre 1996 (1996-09-01), pages 6132-6138, XP000625607<br>ISSN: 0024-9297<br>* page 6136, colonne de droite, ligne 31 - ligne 62 * | 1-9,13 | B01J31/00<br>B01J31/12<br>C08G63/82<br>C08G65/10<br>C08G65/26 |
| A | WO 91 05001 A (DU PONT)<br>18 avril 1991 (1991-04-18)<br>* page 5, ligne 17 - page 6, ligne 25; revendications 1-12 * | 1-13 | |
| A | WO 93 18080 A (DU PONT)<br>16 septembre 1993 (1993-09-16)<br>* revendications 1-14 * | 1-13 | |

DOMAINES TECHNIQUES RECHERCHES

B01J
C08G

Le présent rapport a été établi pour toutes les revendications

| Lieu de la recherche | Date d'achèvement de la recherche | Examinateur |
|---|---|---|
| LA HAYE | 16 septembre 1999 | Decocker, L |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

## ANNEXE AU RAPPORT DE RECHERCHE EUROPEENNE RELATIF A LA DEMANDE DE BREVET EUROPEEN NO.

EP 99 87 0067

La présente annexe indique les membres de la famille de brevets relatifs aux documents brevets cités dans le rapport de recherche européenne visé ci-dessus.
Lesdits members sont contenus au fichier informatique de l'Officeeuropéen des brevets à la date du
Les renseignements fournis sont donnés à titre indicatif et n'engagent pas la responsabilité de l'Office européen des brevets.

16-09-1999

| Document brevet cité au rapport de recherche | Date de publication | Membre(s) de la famille de brevet(s) | Date de publication |
|---|---|---|---|
| WO 9105001 A | 18-04-1991 | US 5028667 A | 02-07-1991 |
| | | AT 124709 T | 15-07-1995 |
| | | AU 6624490 A | 28-04-1991 |
| | | CA 2066029 A | 30-03-1991 |
| | | CN 1051367 A | 15-05-1991 |
| | | DE 69020739 D | 10-08-1995 |
| | | DE 69020739 T | 23-11-1995 |
| | | EP 0493529 A | 08-07-1992 |
| | | FI 921351 A | 27-03-1992 |
| | | GR 90100721 A | 20-01-1992 |
| | | JP 2858947 B | 17-02-1999 |
| | | JP 5500982 T | 25-02-1993 |
| | | MX 22628 A | 01-11-1993 |
| | | PT 95470 A | 22-05-1991 |
| | | US 5095098 A | 10-03-1992 |
| WO 9318080 A | 16-09-1993 | US 5235031 A | 10-08-1993 |

EPO FORM P0460

Pour tout renseignement concernant cette annexe : voir Journal Officiel de l'Office européen des brevets, No.12/82